# EUROPEAN PATENT APPLICATION

(11) **EP 1 887 338 A1**
(43) Date of publication of application: **13.02.2008**
(21) Application number: 06756620.8
(22) Date of filing: 26.05.2006
(51) Int. Cl.: G01M 7/02, B06B 1/16

(54) **TRANSPORTATION PACKAGING TEST APPARATUS**

(30) Priority: 31.05.2005 JP 2005159561; 26.04.2006 JP 2006121879
(71) Applicant: Idex Co., Ltd, Tokyo, 193-0803 (JP)
(72) Inventor: MIZUGUCHI, Shinji c/o IDEX CO., LTD., 594-1,, 1930803 (JP)
(74) Representative: Lauer, Joachim
(86) International application number: PCT/JP2006/310520
(87) International publication number: WO 2006/129556

(57) **Abstract**

A transport packaging testing device includes a vibration table horizontally supported on a stand through coil springs provided at four corners of the back side of the vibration table; a table surface provided on an upper face of the vibration table that holds a test object thereon with a holding fixture; a vibrator provided on the back side of the vibration table for producing vibration of a frequency corresponding to rotation speed due to unbalanced weight between a rotary shaft of a rotation drive with a longitudinally-horizontal rotational axis and an eccentric flywheel integrally interlocking with the rotary shaft; a mounting leg mounted and suspended toward a rotation drive built-in part of the vibrator; and a vibrator control part that controls normal and reverse rotation of the rotation drive. Based on the longitudinal, lateral, and vertical vibrations by the vibrator, the vibration table is subjected to triaxial simultaneous vibration.

## Description

### BACKGROUND OF THE INVENTION

### Field of the Invention

The present invention relates to a transport packaging testing device that is useful for testing by simulative reproduction of vibration received by various types of articles or packages of different weights including lightweight objects and heavyweight objects in various transport or usage environments.

### Description of the Related Art

Japanese Unexamined Patent Application Publication No. 2005-91080 discloses a vibration testing device wherein a vibration table 4 is vibrated in two or three dimensions, only in X direction (lateral direction), Y direction (longitudinal direction), or Z direction (vertical direction), and a test object on the vibration table 4 is vibrated, thereby conducting a test.

Also, dedicated vibration generators are provided for obtaining vibrations in the respective Y, X, Z directions, namely, three vibration generators are required.

For that reason, increases in size and weight of the device are unavoidable, and foundation work or anchoring driving work is required in an installation site. Thus, the device becomes expensive.

Furthermore, there is a problem that such large and heavy device requires a special testing place.

When transport objects, such as various types of articles or packages, are transported by truck or the like, a composite vibration of a vertical vibration caused due to roughness and uneven steps of a road surface, a lateral vibration caused in traveling on a curve, a longitudinal vibration caused at the time of acceleration and deceleration, and the like is applied to the transport objects. As a transport package vibration testing method, a testing method of evaluating vibration resistance of contents or packaging to a vertical vibration received by transport packages in process of transport is specified in JIS Z 0232-2004.

In this case, adjacent transport packages may rub together to be damaged, or articles may rub against packages to be damaged, and a commercial value may be lost.

Such testing has been conducted by using the vibration testing device disclosed in the above patent document, or the like, or by means of an actual vehicle test such as actual transport by truck. However, the former has the above-described problems, and the latter has problems such that test results vary according to transport environment conditions such as driving manners, much labor and cost is required, data is difficult to obtain in process of testing, and risks are increased.

As results of repeated actual vehicle tests on an expressway or a general road including an unpaved road, the inventors of the present invention have found that a ratio of average values of the amplitudes of longitudinal, lateral, and vertical vibrations received by transport packages on a load-carrying platform is approximately 10:8:2.

When a weight of a test object is approximately 100 kg, it is necessary to strengthen not only a vibration table for receiving the test object but also a holding fixture for fixing the heavy test object on the vibration table so as to prevent the vibration table and the holding fixture from being damaged. Such increases in strength result in increases in weight of the vibration table and the holding fixture. As results of the testing by using the vibration testing device in which a vibrator is suspended in the center of the back side of the vibration table increased in strength so as to cope with a heavy object of approximately 100 kg, it has been found that, when a weight of the test object is up to approximately 50 kg, a triaxial composite vibration in the longitudinal, lateral, and vertical directions can be obtained, whereas, when a weight of the test object is approximately 100 kg, the vibration in the longitudinal direction cannot be obtained although a biaxial composite vibration in the vertical and lateral directions is obtained, namely, the triaxial composite vibration including the vibration in the longitudinal direction cannot be obtained.

### SUMMARY OF THE INVENTION

Accordingly, it is an object of the present invention to provide: firstly, a transport packaging testing device that allows a triaxial simultaneous vibration test in respective longitudinal, lateral, and vertical directions, namely, in Y-, X-, and Z-axis directions, is compact, lightweight, and inexpensive, hardly limits testing places, and enables test installation of lightweight test objects; secondly, a transport packaging testing device wherein the accuracy of vibration test data in respective longitudinal, lateral, and vertical directions is high; thirdly, a transport packaging testing device that allows a triaxial simultaneous vibration test in respective longitudinal, lateral, and vertical directions, namely, in Y-, X-, and Z-axis directions, is compact, lightweight, and inexpensive, hardly limits testing places, and enables test installation of a wide range of test objects including lightweight objects and heavyweight objects; fourthly, a transport packaging testing device wherein the accuracy of vibration test data in respective longitudinal, lateral, and vertical directions is high; and fifthly, a transport packaging testing device wherein vibration test data according to an actual vehicle test can be simulatively obtained.

The foregoing object is achieved as is described below.

According to a first aspect of the present invention, a transport packaging testing device includes: a vibration table horizontally supported on a stand through coil springs provided at four corners of the back side of the vibration table; a table surface provided on an upper face of the vibration table that holds a test object thereon with a holding fixture; a vibrator including a rotation drive built-in part, a rotation drive having a rotary shaft with a rotational axis horizontal in a longitudinal direction, and an eccentric flywheel integrally interlocking with the rotary shaft, and provided on the back side of the vibration table for producing vibration of a frequency corresponding to rotation speed due to unbalanced weight between the rotary shaft of the rotation drive and the eccentric flywheel; a mounting leg mounted and suspended toward the rotation drive built-in part of the vibrator; and a vibrator control part for controlling normal and reverse rotation of the rotation drive of the vibrator. Based on the vibration in longitudinal, lateral, and vertical directions produced by the vibrator, the vibration table is subjected to triaxial simultaneous vibration.

Preferably, the vibrator is suspended in a center of the back side of the vibration table so that a center of gravity of the vibrator is aligned with the center axis of the vibration table.

According to a second aspect of the present invention, a transport packaging testing device includes: a vibration table horizontally supported on a stand through coil springs provided at four corners of the back side of the vibration table; a table surface provided on an upper face of the vibration table that holds a test object thereon with a holding fixture; a central vibrator including a rotation drive built-in part, a rotation drive having a rotary shaft with a rotational axis horizontal in a longitudinal direction, and front and rear eccentric flywheels integrally interlocking with either end of the rotary shaft, and provided in the center of the back side of the vibration table for producing vibration in respective vertical and lateral directions of a frequency corresponding to rotation speed due to unbalanced weight between the rotary shaft of the rotation drive and the front and rear eccentric flywheels; a mounting leg mounted and suspended toward the rotation drive built-in part of the central vibrator; a pair of right and left vibrators each including a rotation drive built-in part, a rotation drive having a rotary shaft with a rotational axis horizontal in a lateral direction, and an eccentric flywheel integrally interlocking with the rotary shaft, and provided at right and left positions in the center of the back side of the vibration table for producing vibration in a longitudinal direction of a frequency corresponding to rotation speed due to unbalanced weight between the rotary shaft of the rotation drive and the eccentric flywheel; right and left mounting legs respectively mounted and suspended toward the rotation drive built-in parts of the right and left vibrators so that the rotational axes of the right and left vibrators are coaxially aligned; and a vibrator control part that controls normal and reverse rotation of the rotation drive of the central vibrator, and controls the rotation drives of the right and left vibrators to rotate in the same rotating direction and at the same rotation speed. Based on composite vibration in the longitudinal, lateral, and vertical directions produced by the central vibrator, and right and left vibrators, the vibration table is subjected to triaxial simultaneous vibration.

Preferably, the central vibrator includes front and rear eccentric flywheel built-in parts, and the front and rear eccentric flywheel built-in parts as well as the right and left vibrators are suspended in an axially symmetrical manner with respect to the center axis of the vibration table.

The vibration table may be arbitrarily provided with a vibration adjusting weight part at a side edge so that a ratio of the amplitude of the longitudinal, lateral and vertical vibration of the vibration table can be fine-adjusted.

Preferably, a ratio of the amplitude of the longitudinal, lateral and vertical vibration of the vibration table is approximately 10:8:2.

In the present invention, the terms "right" and "left" denote the directions, right and left facing the front (right and left facing the advancing direction of a vehicle), the terms "front" and "rear" denote the directional opposite of right and left (forward and backward movement directions of the vehicle), and the terms "upper" and "lower" denote the vertical direction. Also, the wording "triaxial simultaneous vibration" denotes a composite vibration of vibrations in respective lateral, longitudinal and vertical directions (Y, X, Z directions). The wording "a center axis of a vibration table" denotes a vertical axis passing through the center of gravity of the horizontal vibration table.

The vibration table may have a square shape, a rectangular shape, or a circular shape in plan view, and is not limited as long as a table surface on which test objects can be placed is provided. The holding fixture may hold a test object fixedly or in a freely moving state. The coil springs support the vibration table and the test object or the like held on a bed of the vibration table, and reduce or absorb vibration of the bed to minimize or prevent transmission of the vibration to the stand. The table surface and/or the holding fixture of the vibration table may be electrostatically treated by attaching an electrostatic sheet to a surface in contact with test objects, or the like so that a static electricity is hardly generated between the table surface and/or the holding fixture, and the test objects in process of testing.

The vibrator and the central vibrator provided on the back side of the vibration table may be suspended in the center of the back side thereof, or may be suspended so that the front and rear eccentric flywheel built-in parts become longitudinally axially-symmetrical with respect to the center axis of the vibration table. In the same manner, the right and left vibrators provided on the back side of the vibration table may be suspended on either side of the center of the back side thereof, or may be suspended in an axially symmetrical with respect to the center axis of the vibration table.

Alternatively, the front and rear eccentric flywheel built-in parts of the central vibrator and the right and left vibrators may be suspended in an axially symmetrical manner with respect to the center axis of the vibration table, namely, in a state where the center of gravity of the central vibrator, and the center of gravity between the right and left vibrators are aligned with the center axis of the vibration table and balanced.

The central vibrator includes a central rotation drive built-in part and front and rear eccentric flywheel built-in parts, and serves as a rotating vibration generator for producing the biaxial composite vibration in the vertical and lateral directions of a frequency corresponding to the rotation speed due to the unbalanced weight between the rotary shaft of the rotation drive such as a motor and front and rear eccentric flywheels integrally interlocking with either end of the rotary shaft. In the center of the back side of the vibration table, a mounting leg provided toward the rotation drive built-in part is mounted. Thus, the vibration table is subjected to the biaxial composite vibration in the vertical and lateral directions produced by, so to say, oscillating rotation, of the front and rear eccentric flywheels, and the bed of the vibration table is simultaneously vibrated in the vertical and lateral directions, thereby vibrating the test obj ect placed on the bed in the vertical and lateral directions. The rotating direction and rotation speed of the front and rear eccentric flywheels are the same as those of the rotary shaft of the rotation drive.

The rotation drive of the central vibrator receives signals from the vibrator control part to be normally and reversely rotatable. In the normal rotation (right rotation), the test object placed on the vibration table is vibrated in the left direction while receiving the biaxial simultaneous vibration in the vertical and lateral directions, and in the reverse rotation (left rotation), the test object placed on the vibration table is vibrated in the right direction while receiving the biaxial simultaneous vibration in vertical and lateral directions.

Each of the right and left vibrators includes a rotation drive built-in part and an eccentric flywheel built-in part, and serves as a rotating vibration generator for producing vibration in the longitudinal direction of a frequency corresponding to the rotation speed due to unbalanced weight between a rotary shaft of a rotation drive such as a motor and an eccentric flywheel integrally interlocking with the rotary shaft. On the right and left positions of the center of the back side of the vibration table, right and left mounting legs respectively provided toward the rotation drive built-in parts of the right and left vibrators are respectively mounted so that the rotational axes of the right and left vibrators are laterally and coaxially aligned, and become horizontal. Thus, the vibration table is subjected to the vibration in the longitudinal direction produced by, so to say, oscillating rotation, of the eccentric flywheels, and the bed of the vibration table is simultaneously vibrated in the longitudinal direction, thereby longitudinally vibrating the test object placed on the bed. The rotating direction and rotation speed of the rotary shafts and the eccentric flywheels of the right and left vibrators become the same with each other by receiving signals from the vibrator control part. A difference in rotating direction and rotation number between the right and left vibrators inappropriately causes rotation around the center axis of the vibration table, namely, twisting.

The vibrator control part can control at least the normal and reverse rotation of the rotation drive of the central vibrator and can control the rotation drives of the right and left vibrators to rotate in the same direction and at the same rotation number. Alternatively, the vibrator control part may be provided on a stand, or on a separate dedicated table.

The vibration adjusting weight part may be arbitrarily provided at the side edge of the vibration table so as to have a weight enabling fine adjustment of a ratio of the amplitudes of the longitudinal, lateral, and vertical vibrations of the vibration table. When the vibration adjusting weight part is provided on the front edge of the bed, the amplitude of the vertical vibration is suppressed. When the vibration adjusting weight part is provided on the right or left edge of the bed, the amplitude of the lateral vibration is suppressed.

According to the first embodiment of the present invention, while the vibration of the vibration table is absorbed into the coil springs so as to be prevented from being transmitted to the stand, the triaxial simultaneous vibration test can be conducted by simultaneously vibrating lightweight test objects on the vibration table in the respective longitudinal, lateral, and vertical directions.

Also, by controlling the normal and reverse rotation of the rotation drive, the test object is vibrated in the left direction or the right direction while receiving the triaxial simultaneous vibration. Thus, the same level of data as the data obtained when traveling on a left curve or a right curve in transport by truck, or the like can be obtained.

Furthermore, the transport packaging testing device according to the first embodiment is compact, lightweight, and inexpensive, and testing places are hardly limited as long as space for the stand is given.

Therefore, the transport packaging testing device is useful for various applications, such as testing for damage to equipment or articles, testing for occurrence of pinholes on retort packs, testing for darkening or peeling-off of labels, testing for rubbing-off of print parts, testing for cracks of tablets or biscuits, and selection of packaging or packing material.

Preferably, vibration test data according to an actual vehicle test may be simulatively obtained in a testing room by appropriately fine-adjusting a ratio of the amplitudes of the longitudinal, lateral, and vertical vibrations of the vibration table. Thus, transport data by truck, or the like, mostly used as transportation, may be previously obtained for coping therewith.

According to the second embodiment of the present invention, the triaxial simultaneous vibration can be performed by a composite vibration of the vibrations in the respective vertical and lateral directions produced by the central vibrator suspended in the center of the back side of the vibration table, and the vibration in the longitudinal direction produced by the pair of right and left vibrators suspended on the back side of the vibration table. Therefore, the triaxial simultaneous vibration test can be conducted using any test object including lightweight objects or heavyweight objects, held on the vibration table.

While the vibration of the vibration table is absorbed into the coil springs so as to be prevented from being transmitted to the stand, the triaxial simultaneous vibration test can be conducted by simultaneously vibrating a test object on the vibration table in the respective longitudinal, lateral, and vertical directions.

Also, by controlling the normal and reverse rotation of the rotation drive, the test object is vibrated in the left direction or the right direction while receiving the triaxial simultaneous vibration. Thus, the same level of data as the data obtained when traveling on a left curve or a right curve in transport by truck, rail, or ship can be obtained.

The transport packaging testing device according to the second embodiment is compact, lightweight, and inexpensive, and testing places are hardly limited as long as space for the stand is given.

Therefore, the transport packaging testing device allows the triaxial simultaneous vibration test using any test object from lightweight objects, or heavyweight objects, up to approximately 100 kg, and is useful for various applications, such as testing for damage to equipment or articles, testing for occurrence of pinholes on retort packs, testing for darkening or peeling-off of labels, testing for rubbing-off of print parts, testing for cracks of tablets or biscuits, and selection of packaging or packing material.

Preferably, the front and rear eccentric flywheel built-in parts of the central vibrator, and the right and left vibrators are suspended on the back side of the vibration table in an axially symmetrical manner with respect to the center axis of the vibration table, thereby keeping center-of-gravity balance, i.e., horizontal balance of the vibration table. Therefore, accuracy of vibration test data in the respective longitudinal, lateral, and vertical directions may be increased.

Preferably, vibration test data according to an actual vehicle test may be simulatively obtained in a testing room by appropriately fine-adjusting a ratio of the amplitudes of the longitudinal, lateral, and vertical vibrations of the vibration table. Thus, transport data by rail or ship in addition to trucks mostly used as transportation may be previously obtained for coping therewith.

### BRIEF DESCRIPTION OF THE DRAWINGS

Fig. 1 is a side view, partially in section, of a transport packaging testing device according to a first embodiment of the present invention;
Fig. 2 is a front view of the transport packaging testing device shown in Fig. 1;
Fig. 3 is a plan view of the transport packaging testing device shown in Fig. 1;
Fig. 4 is a cross-sectional view of the transport packaging testing device shown in Fig. 1;
Fig. 5(a) is a graph showing the amplitude of a vertical vibration of a vibration table shown in Fig. 1, Fig. 5(b) is a graph showing the amplitude of a lateral vibration of the vibration table, and Fig. 5(c) is a graph showing the amplitude of a longitudinal vibration of the vibration table, wherein the abscissa represents time and the ordinate represents the amplitude of vibration;
Fig. 6 is a side view, partially in section, of a transport packaging testing device according to a second embodiment of the present invention;
Fig. 7 is a front view of the transport packaging testing device shown in Fig. 6;
Fig. 8 is a plan view of the transport packaging testing device shown in Fig. 6;
Fig. 9 is a cross-sectional view of the transport packaging testing device shown in Fig. 6;
Fig. 10(a) is a graph showing the amplitude of a vertical vibration of a vibration table shown in Fig. 6, Fig. 10(b) is a graph showing the amplitude of a lateral direction of the vibration table, and Fig. 10(c) is a graph showing the amplitude of a longitudinal vibration of the vibration table, wherein the abscissa represents time and the ordinate represents the amplitude of vibration; and
Fig. 11(a), 11(b), and 11(c) are plan views showing holding states of respective test objects.

### DESCRIPTION OF THE PREFERRED EMBODIMENTS

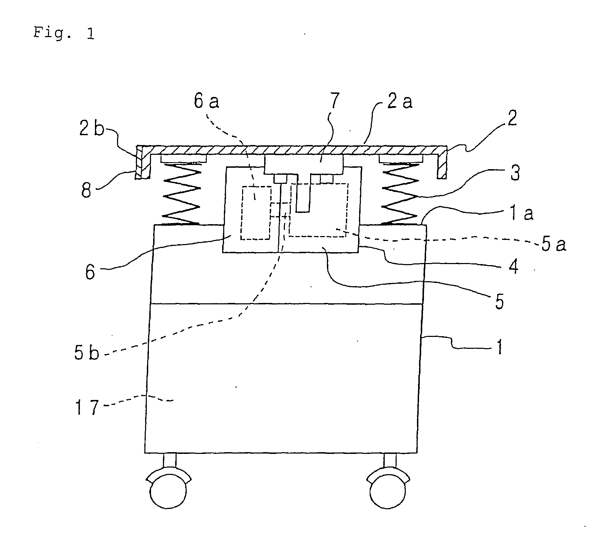

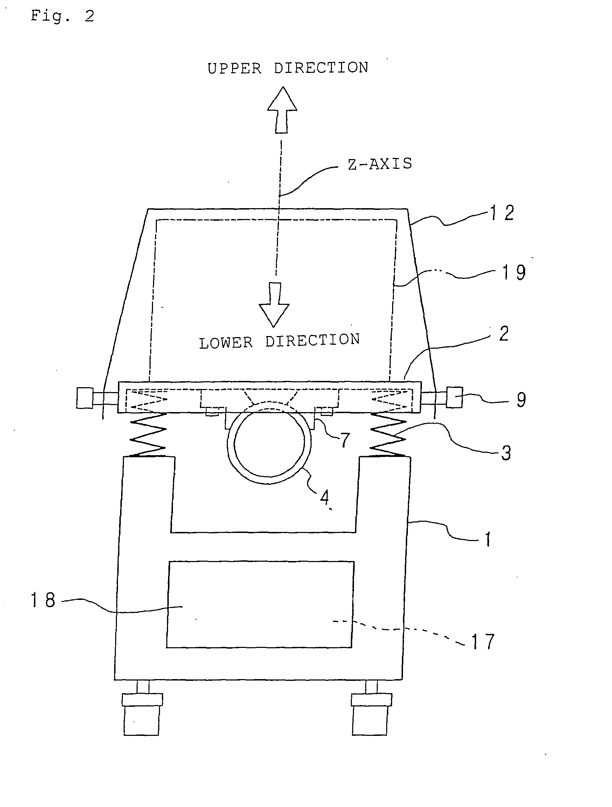

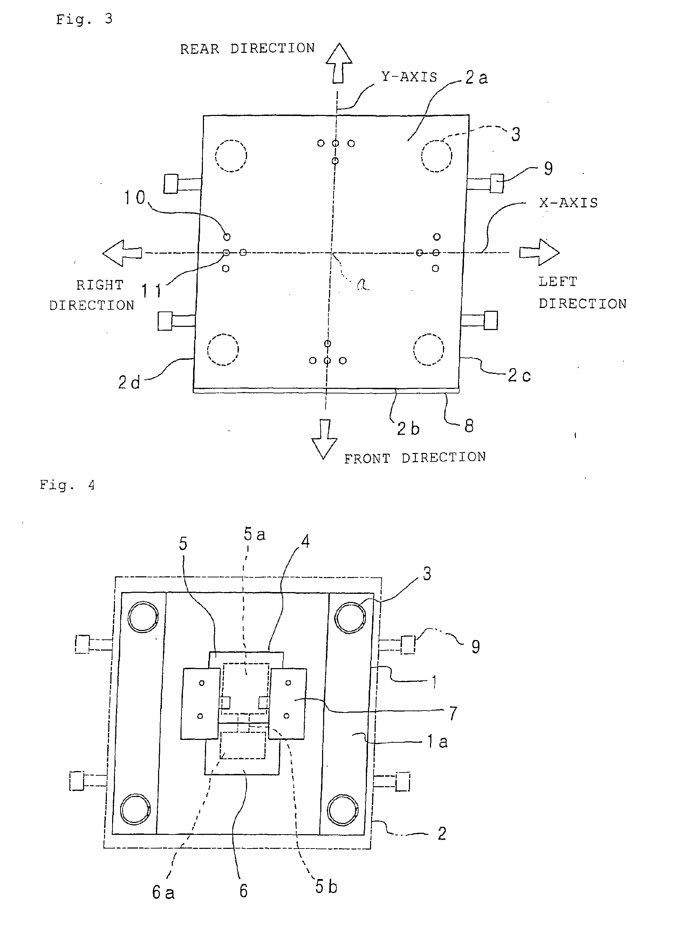

Figs. 1 to 5 show a transport packaging testing device according to a first embodiment of the present invention. A stand 1 horizontally supports a vibration table 2 on an upper face 1a thereof through coil springs 3 provided at four corners of the back side of the vibration table 2. Thus, vibration of the vibration table 2 produced by a vibrator 4 provided on the back side of a bed is absorbed into the coil springs 3 so as to be substantially prevented from being transmitted to the stand 1.

The vibrator 4 includes a rotation drive built-in part 5 and an eccentric flywheel built-in part 6, and is configured to produce vibration of a frequency corresponding to the rotation speed due to unbalanced weight between a rotary shaft 5b of a rotation drive 5a with a horizontal rotational axis and an eccentric flywheel 6a integrally interlocking with the rotary shaft 5b. The rotation drive 5a is adapted to receive signals from a vibrator control part 17 provided in the stand 1 to be normally and reversely rotatable.

The vibrator 4 is suspended so that a composite vibration of respective vibrations in the vertical direction (Z-axis direction), lateral direction (X-axis direction), and longitudinal direction (Y-axis direction) can be simultaneously applied to the vibration table 2 by mounting a mounting leg 7 erected toward the rotation drive built-in part 5 in the approximate center of the back side of the vibration table with fixtures such as bolts while adjusting weight balance so that the rotational axis of the rotation drive 5a is aligned along the longitudinal direction and so that the center of gravity of the vibrator 4 is aligned with a center axis a of the vibration table 2.

The vibration table 2 has a square shape in plan view. A vibration adjusting weight part 8 is arbitrarily provided at a front edge 2b, for adjusting vibration so that a ratio of the amplitudes of the vertical, lateral, and longitudinal vibrations of the vibration table 2 by the vibrator 4 becomes approximately 10:8:2.

On a table surface 2a provided on the upper face of the vibration table 2, a test object can be fixedly held by a holding band 12. The holding band 12 has elastic stretchability, with either end of the holding band 12 removably attached to stoppers 9 provided on left and right edges 2c and 2d of the vibration table 2.

Also, the table surface 2a is provided with screw holes 10 for fixing an L-shaped holding fixture 13 or a hooked L-shaped holding fixture 14 with a bolt 16, and screw holes 11 for fixing a cruciform holding fixture 15 with the bolt 16.

The vibrator control part 17 is programmed to conduct a transport packaging test by inputting stop and start movement, normal and reverse rotation, operation time, the number of times of operation, etc., of the rotation drive 5a from a liquid crystal touch panel 18. The programs are displayed on the liquid crystal touch panel 18.,

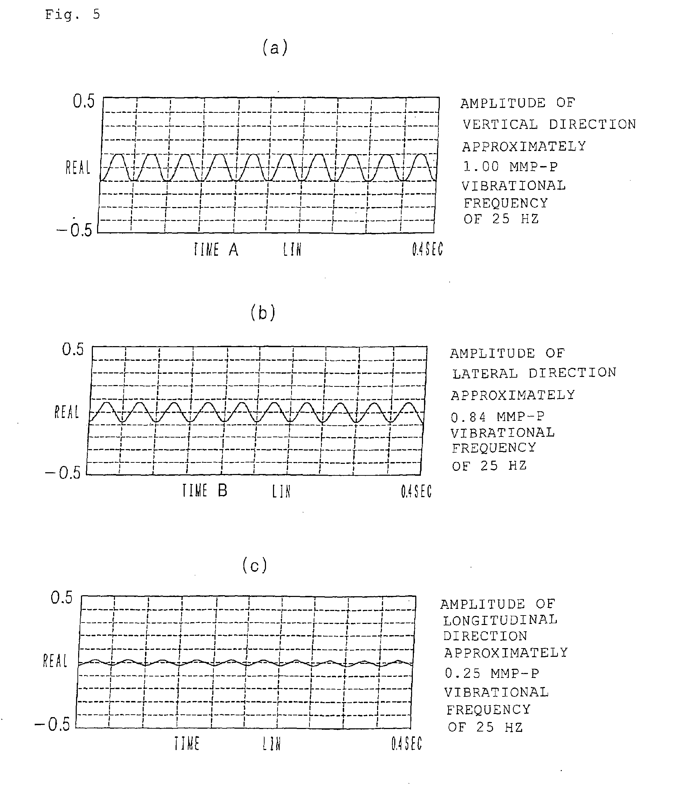

A state of the testing of a test object using the above-described transport packaging testing device illustrated in Fig. 1 will be described with reference to graphs shown in Fig. 5.

A cardboard box 19 in which plastic bottles are stored is placed on the table surface 2a, and fixed by the holding band 12.

Thereafter, test operation is started, and conducted for a definite period of time while simultaneously vibrating the cardboard box 19 placed on the vibration table 2 in the

respective longitudinal, lateral, and vertical directions, and performing operation for alternately switching rotation of the rotation drive 5a between the normal rotation and the reverse rotation in process of the test operation. The testing time (vibration time) corresponds to a travel distance of 1000 km per 20 minutes by an actual vehicle, and is equivalent to a travel test in the range of 1000 to 2000 km per 40 minutes, or 2000 km or more per 60 minutes.

The vibration of the vibration table 2 in process of the testing is measured with regard to the number of vibration (frequency) Hz, an acceleration amplitude mmp-p, and a vibration time. As a result of that, when a vibrational frequency is 25 Hz, an amplitude of the vertical vibration is approximately 1.00 mmp-p output (see Fig. 5A), an amplitude of the lateral vibration is approximately 0.84 mmp-p output (see Fig. 5B), and an amplitude of the longitudinal vibration is approximately 0.25 mmp-p output (see Fig. 5C).

By conducting such testing, it is possible to visually confirm whether or not darkening is caused by friction between printing seals of the plastic bottles stored in the cardboard box 19 and simultaneously vibrated in the longitudinal, lateral, and vertical directions, in the same manner as transport by an actual vehicle. Also, damage to various packs such as milk cartons, a printing blur such as printed letters, occurrence of pinholes on retort packs, or the like can be tested.

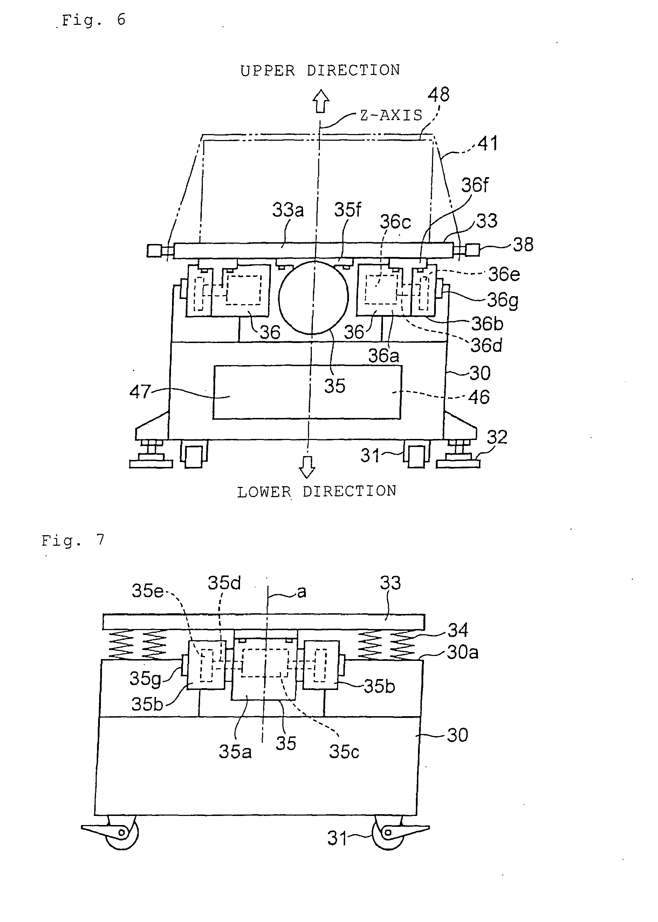

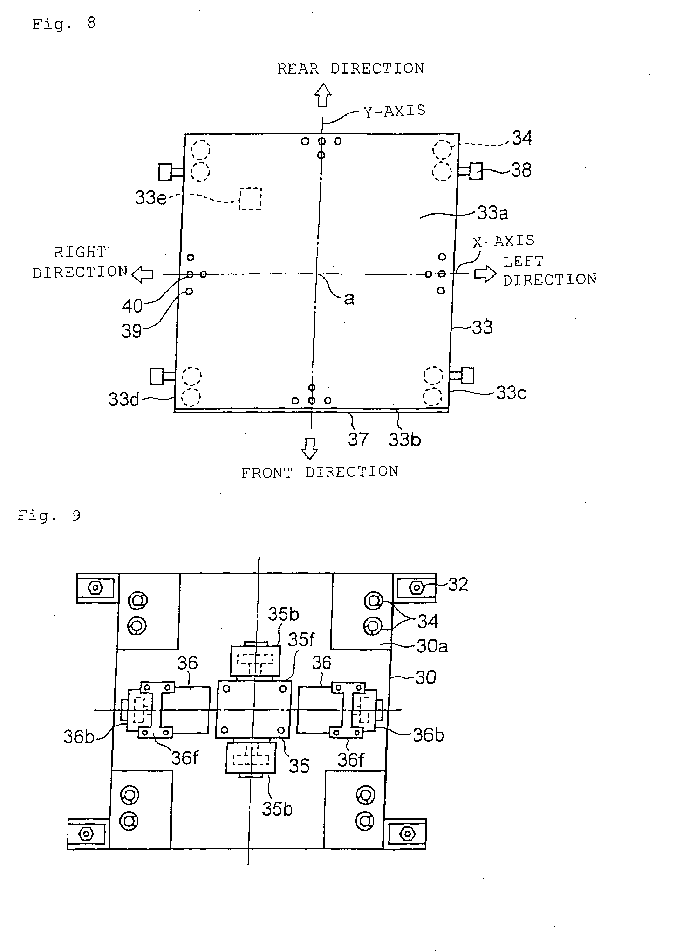

Figs. 6 to 10 show a transport packaging testing device according to a second embodiment of the present invention. A stand 30 is provided with casters 31 with locks at four corners of the bottom face thereof, and vertically movable and adjustable fixing legs 32 at the sides of the respective casters 31, and is configured to easily move and easily stop at an arbitrary position.

On an upper face 30a of the stand 30, a vibration table 33 is horizontally supported through coil springs 34 provided at four corners of the back side of the vibration table 33. Thus, vibration of the vibration table 33 caused by operation of a central vibrator 35 and a pair of right and left vibrators 36 suspended on the back side of the stand 30 is absorbed into the coil springs 34 so as to be prevented from being transmitted to the stand 30. A vibration sensor 33e is provided on the back side of the vibration table 33, for detecting respective vibrations in the vertical direction (Z-axis direction), lateral direction (X-axis direction), and longitudinal direction (Y-axis direction). The detected vibration data is transmitted to a vibrator control part 46, and thus, amplitudes of the longitudinal, lateral, and vertical vibrations of the vibration table 33 are displayed on a liquid crystal touch panel 47.

The central vibrator 35 includes a central rotation drive built-in part 35a, and front and rear eccentric flywheel built-in parts 35b, and is configured to produce vibration of a frequency corresponding to the rotation speed, namely, a composite vibration in the vertical and lateral directions, due to unbalanced weight between a rotary shaft 35d of a rotation drive 35c with a rotational axis horizontal in the longitudinal direction, and front and rear eccentric flywheels 35e integrally interlocking with the front and rear ends of the rotary shaft 35d. The composite vibration can be fine-adjusted to be set large or small by rotating an adjusting knob 35g to increase or decrease eccentricity of the front and rear eccentric flywheels 35e. The rotation drive 35c of the central vibrator 35 is adapted to receive signals from the vibrator control part 46 provided in the stand 30 to be normally and reversely rotatable. The front and rear eccentric flywheels 35e on the same rotational axis as the rotary shaft 35d rotate in the same rotating direction and at the same rotation speed.

A mounting leg 35f provided toward the rotation drive built-in part 35a is mounted and suspended in the center of the back side of the vibration table 33 by fixtures such as bolts while adjusting weight balance so that the rotational axis of the rotation drive 35c is horizontal in the longitudinal direction and so that the front and rear eccentric flywheel built-in parts 35b become axially symmetrical with respect to a center axis a of the vibration table 33. Thus, the vibration table 33 simultaneously vibrates in the vertical and lateral directions based on the composite vibration in the vertical direction (Z-axis direction) and lateral direction (X-axis direction) caused by operation of the central vibrator 35.

Each of the right and left vibrators 36 includes a rotation drive built-in part 36a and an eccentric flywheel built-in part 36b, and is configured to produce vibration of a frequency corresponding to the rotation number, namely, the vibration in the longitudinal direction, due to unbalanced weight between a rotary shaft 36d of a rotation drive 36c with a rotational axis horizontal in the lateral direction, and an eccentric flywheel 36e integrally interlocking with the rotary shaft 36d. The vibration can be fine-adjusted to be set large or small by rotating an adjusting knob 36g to increase or decrease eccentricity of the eccentric flywheel 36e. The rotation drive 36c of each of the right and left vibrators 36 is adapted to receive signals from the vibrator control part 46 to rotate in the same rotating direction and at the same rotation speed.

Right and left mounting legs 36f erected toward the rotation drive built-in parts 36a of the right and left vibrators 36 are mounted and suspended at either side of the central vibrator 35 provided on the back side of the vibration table 33 with fixtures such as bolts while adjusting weight balance so that the rotational axes of the right and left rotary shafts 36d are aligned with the same rotational axis that is horizontal in the lateral direction and so that the right and left vibrators 36 become axially symmetrical with respect to the center axis a of the vibration table 33. Thus, based on the vibration in the longitudinal direction (Y-axis direction) caused by operation of the right and left vibrators 36, the vibration table 33 simultaneously vibrates in the longitudinal direction as well as in the vertical and lateral directions, namely the triaxial simultaneous vibration can be performed.

The vibration table 33 has a slightly longitudinally elongated rectangular shape in plan view. A vibration adjusting weight part 37 is arbitrarily provided at a front edge 33b, for adjusting vibration so that a ratio of the amplitudes of the vertical, lateral, and longitudinal vibrations of the vibration table 33 by the central vibrator 35 and the pair of right and left vibrators 36 becomes approximately 10:8:2.

On a table surface 33a provided on the upper face of the vibration table 33, a test object can be fixedly held by a holding band 41. The holding band 41 has elastic stretchability with either end of the holding band 41 removably attached to stoppers 38 provided on left and right edges 33c and 33d of the vibration table 33.

Also, the table surface 33a is provided with screw holes 39 for fixing an L-shaped holding fixture 42 or a hooked L-shaped holding fixture 43 with a bolt 45, and screw holes 40 for fixing a cruciform holding fixture 44 with the bolt 45.

The table surface 33a of the vibration table 33 and the holding band 41 are electrostatically treated by attaching an electrostatic sheet to a surface in contact with the test object, or the like so that a static electricity is hardly generated in process of the testing.

The vibrator control part 46 is programmed to conduct a transport packaging test including the triaxial simultaneous vibration by inputting stop and start movement, normal and reverse rotation, operation time, the number of times of operation, etc., of the rotation drive 35c of the central vibrator 35, and stop and start movement, operation time, the number of times of operation, etc., of the rotation drive 36c of each of the right and left vibrators 36, from the liquid crystal touch panel 47. The programs are displayed on the liquid crystal touch panel 47.

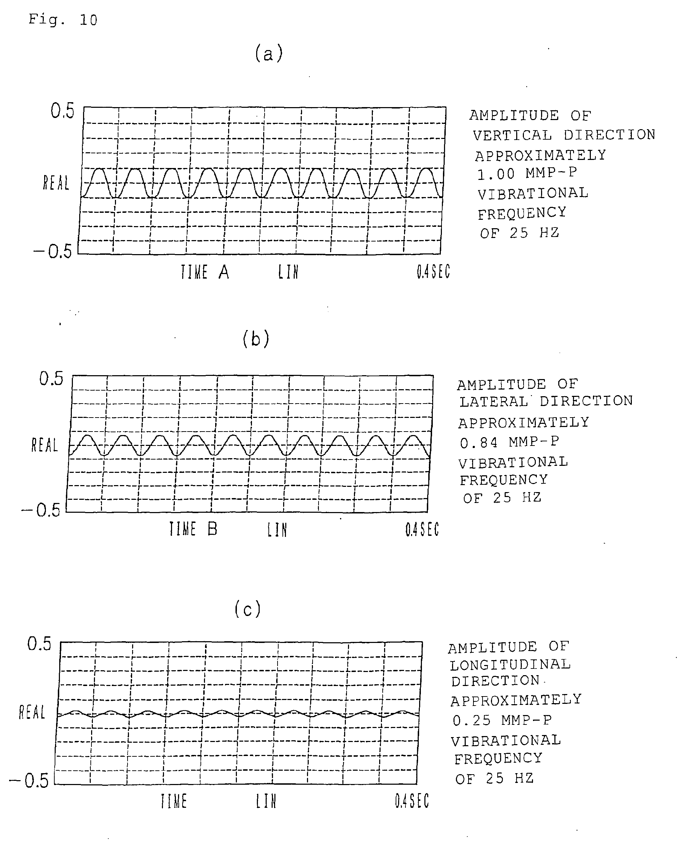

A state of the testing of the test object by using the above-described transport packaging testing device illustrated in Fig. 6 will be described with reference to graphs shown in Fig. 10.

A cardboard box 48 in which plastic bottles are stored is placed on the table surface 33a, and fixed by the holding band 41.

Thereafter, test operation is started, and conducted for a definite period of time while performing the triaxial simultaneous vibration in which the cardboard box 48 placed on the vibration table 33 is simultaneously vibrated in the respective longitudinal, lateral, and vertical directions, and performing operation for alternately switching rotation of the rotation drive 35c of the central vibrator 35 between the normal rotation and the reverse rotation in process of the test operation. The testing time (vibration time) corresponds to a travel distance of 1000 km per 20 minutes by an actual vehicle, and is equivalent to a travel test in the range of 1000 to 2000 km per 40 minutes, or a travel test of 2000 km or more per 60 minutes.

The vibration of the vibration table 33 in process of the testing is measured with regard to the number of vibration (frequency) Hz, an acceleration amplitude mmp-p, and a vibration time. As a result of that, when a vibrational frequency is 25 Hz, an amplitude of the vertical vibration is approximately 1.00 mmp-p output (see Fig. 10(a)), an amplitude of the lateral vibration is approximately 0.84 mmp-p output (see Fig. 10(b)), and an amplitude of the longitudinal vibration is approximately 0.25 mmp-p output (see Fig. 10(c)).

By conducting such testing, it is possible to visually confirm whether or not darkening is caused by friction between printing seals of the plastic bottles stored in the cardboard box 48, and simultaneously vibrated in the longitudinal, lateral, and vertical directions, in the same manner as transport by an actual vehicle. Also, damage to various packs such as milk cartons, a printing blur such as printed letters, occurrence of pinholes on retort packs, or the like can be tested.

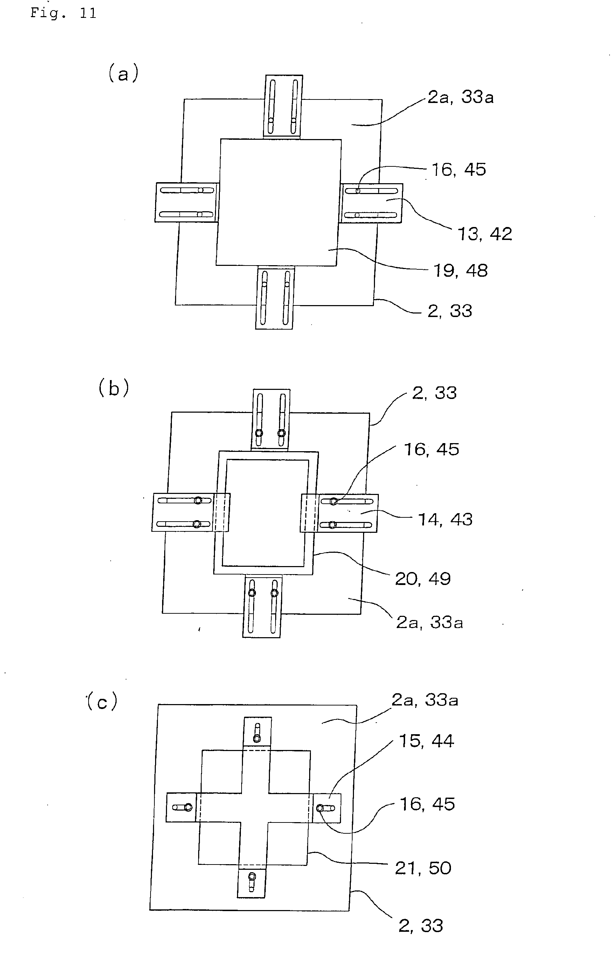

Fig. 11 illustrates different holding manners of test objects, and the holding manners illustrated therein are common in the respective transport packaging testing devices illustrated in Figs. 1 and 6. Referring to Fig. 11(a), the cardboard box 19 or 48 is held from four directions on the table surface 2a or 33a of the vibration table 2 or 33 by the L-shaped holding fixture 13 or 42 so as to be freely movable in the vertical direction. Referring to Fig. 11(b), a plastic case 20 or 49 is fixedly held by the L-shaped holding fixture 13 or 42 and the hooked L-shaped holding fixture 14 or 43.

Referring to Fig. 11(c), trays 21 or 50 in which electronic components are stored are stacked and fixedly held by the cruciform holding fixture 15 or 44.

Triaxial simultaneous vibration tests of various test objects held in the respective holding manners described above may be conducted for testing for darkening, damage, a printing blur, occurrence of pinholes, or the like.

## Claims

1. A transport packaging testing device, comprising:
a vibration table horizontally supported on a stand through coil springs provided at four corners of a back side of the vibration table;
a table surface provided on an upper face of the vibration table that holds a test object thereon with a holding fixture;
a vibrator including a rotation drive built-in part, a rotation drive having a rotary shaft with a rotational axis horizontal in a longitudinal direction, and an eccentric flywheel integrally interlocking with the rotary shaft, and provided on the back side of the vibration table for producing vibration of a frequency corresponding to rotation speed due to unbalanced weight between the rotary shaft of the rotation drive and the eccentric flywheel;
a mounting leg mounted and suspended toward the rotation drive built-in part of the vibrator; and
a vibrator control part for controlling normal and reverse rotation of the rotation drive of the vibrator,
wherein, based on the vibration in longitudinal, lateral, and vertical directions produced by the vibrator, the vibration table is subjected to triaxial simultaneous vibration.

2. The transport packaging testing device according to Claim 1, wherein the vibrator is suspended in a center of the back side of the vibration table so that a center of gravity of the vibrator is aligned with a center axis of the vibration table.

3. A transport packaging testing device, comprising:
a vibration table horizontally supported on a stand through coil springs provided at four corners of a back side of the vibration table;
a table surface provided on an upper face of the vibration table that holds a test object thereon with a holding fixture;
a central vibrator including a rotation drive built-in part, a rotation drive having a rotary shaft with a rotational axis horizontal in a longitudinal direction, and front and rear eccentric flywheels integrally interlocking with either end of the rotary shaft, and provided in a center of the back side of the vibration table for producing vibration in respective vertical and lateral directions of a frequency corresponding to rotation speed due to unbalanced weight between the rotary shaft of the rotation drive and the front and rear eccentric flywheels;
a mounting leg mounted and suspended toward the rotation drive built-in part of the central vibrator;
a pair of right and left vibrators each including a rotation drive built-in part, a rotation drive having a rotary shaft with a rotational axis horizontal in a lateral direction, and an eccentric flywheel integrally interlocking with the rotary shaft, and provided at right and left positions in the center of the back side of the vibration table for producing vibration in a longitudinal direction of a frequency corresponding to rotation speed due to unbalanced weight between the rotary shaft of the rotation drive and the eccentric flywheel;
right and left mounting legs respectively mounted and suspended toward the rotation drive built-in parts of the right and left vibrators so that the rotational axes of the right and left vibrators are coaxially aligned; and
a vibrator control part that controls normal and reverse rotation of the rotation drive of the central vibrator, and controls the rotation drives of the right and left vibrators to rotate in the same rotating direction and at the same rotation speed,
wherein, based on composite vibration in the longitudinal, lateral, and vertical directions produced by the central vibrator, and right and left vibrators, the vibration table is subjected to triaxial simultaneous vibration.

4. The transport packaging testing device according to Claim 3, wherein front and rear eccentric flywheel built-in parts of the central vibrator as well as the right and left vibrators are suspended in an axially symmetrical manner with respect to a center axis of the vibration table.

5. The transport packaging testing device according to Claim 1 or 3, wherein the vibration table is arbitrarily provided with a vibration adjusting weight part at a side edge so that a ratio of amplitude of the longitudinal, lateral and vertical vibration of the vibration table can be fine-adjusted.

6. The transport packaging testing device according to any one of Claims 1 to 5, wherein a ratio of amplitude of the longitudinal, lateral and vertical vibration of the vibration table is approximately 10:8:2.
